# EUROPÄISCHE PATENTANMELDUNG

(11) **EP 1 018 422 A2**
(43) Veröffentlichungstag der Anmeldung: **12.07.2000**
(21) Anmeldenummer: 99126101.7
(22) Anmeldetag: 29.12.1999
(51) Int. Cl.: B29D 30/20, B29D 30/58

(54) **Verfahren zur Herstellung eines Radialluftreifens über einen Reifenbasiskörper und Reifenbasiskörper**

(30) Priorität: 07.01.1999 DE 19900226
(71) Anmelder: Continental Aktiengesellschaft, 30165 Hannover (DE)
(72) Erfinder: Wrede, Martin, 34497 Korbach (DE); Döring, Werner, 30823 Garbsen (DE); Campsheide, Olaf, 31582 Nienburg (DE)

(57) **Zusammenfassung**

Die Erfindung betrifft einerseits ein Verfahren zur Herstellung eines Radialluftreifens (1), bei dem in einem ersten Verfahrensteil ein Reifen-Basiskörper aufgebaut und vulkanisiert wird, welcher in einem zweiten Verfahrensteil zu einem kompletten Reifen ergänzt und nochmals vulkanisiert wird, und andererseits den Reifen-Basiskörper.

Der Reifen-Basiskörper umfasst Wulstbereiche (4), Seitenwände, eine Radialkarkasse (2) und als radial äußerste Lage entweder eine der Gürtellagen (6) oder eine einen bereits aufgebrachten Gürtel abdeckende und zumindest einlagig ausgeführte Bandage, die bezüglich der in ihr verlaufenden Festigkeitsträger asymmetrisch gummiert ist, wobei die Seite mit der dickeren Gummierung der Außenseite zugewandt und vor dem Komplettieren des Reifens im zweiten Verfahrensteil angerauht wird. Die radial äußerste Lage (7) wird derart asymmetrisch gummiert, dass sich der höhere Materialanteil an der Außenseite dieser Lage (7) aus dem durch den Anrauhvorgang wieder abgetragenen Material plus einem Anteil an Reservematerial in der Größenordnung eines Bruchteiles des abzutragenden Materials zusammensetzt.

## Beschreibung

Die gegenständliche Erfindung betrifft ein Verfahren zur Herstellung eines Radialluftreifens, bei dem in einem ersten Verfahrensteil ein Reifen-Basiskörper aufgebaut und vulkanisiert wird, welcher in einem zweiten Verfahrensteil zu einem kompletten Reifen ergänzt und nochmals vulkanisiert wird, wobei der Reifen-Basiskörper Wulstbereiche, Seitenwände, eine Radialkarkasse und als radial äußerste Lage entweder eine der Gürtellagen oder eine einen bereits aufgebrachten Gürtel abdeckende und zumindest einlagig ausgeführte Bandage umfasst, und wobei die radial äußerste Lage bezüglich der in ihr verlaufenden Festigkeitsträger asymmetrisch gummiert ist, wobei die Seite mit der dickeren Gummierung der Außenseite zugewandt und vor dem Komplettieren des Reifens im zweiten Verfahrensteil angerauht wird.

Die Erfindung betrifft ferner einen Reifen-Basiskörper hergestellt nach einem in zwei voneinander getrennten Teilen durchgeführten Verfahren, bei dem im ersten Verfahrensteil der Reifen-Basiskörper aufgebaut und vulkanisiert wird, welcher im zweiten Verfahrensteil zu einem kompletten Reifen ergänzt und nochmals vulkanisiert wird, wobei der Reifen-Basiskörper Wulstbereiche, Seitenwände, eine Radialkarkasse und als radial äußerste Lage entweder eine der Gürtellagen oder eine einen bereits aufgebrachten Gürtel abdeckende und zumindest einlagig ausgeführte Bandage aufweist, und wobei die radial äußerste Lage bezüglich der in ihr verlaufenden Festigkeitsträger asymmetrisch gummiert ist, wobei die Seite mit der dickeren Gummierung der Außenseite zugewandt ist und vor dem Komplettieren zu einem fertigen Reifen im zweiten Verfahrensteils angerauht wird.

Ein derartiges Reifenherstellverfahren und auch ein derartiger im ersten Verfahrensteil gebildeter Reifen-Basiskörper sind aus der EP-A 0 729 825 bekannt.

Im ersten Verfahrensteil wird ein Reifen-Basiskörper, insbesondere schrittweise und aus den rohen Reifenbauteilen, aufgebaut und vulkanisiert. Im zweiten Verfahrensteil werden dann die noch fehlenden Reifenaufbauteile, bevorzugt ebenfalls als rohe Bauteile, aufgebracht und der fertiggestellte Reifen wird nochmals einem Vulkanisationsvorgang unterzogen.

Durch das Teilen des Herstellprozesses wird es möglich, unterschiedliche Reifeneigenschaften zu optimieren bzw. auf diese Einfluss zu nehmen. Welche Eigenschaften dies sind und in welchem Ausmaß diese beeinflussbar sind, ist unter anderem davon abhängig, wieweit der Reifen-Basiskörper im ersten Verfahrensteil bereits aufgebaut wird. Ein weiterer Vorteil dieses Verfahrens liegt in der weitgehenden Flexibilisierung der Produkt- und Produktionsplanung. Dies insbesonders aus dem Grund, weil der vulkanisierte Reifen-Basiskörper über einen längeren Zeitraum lagerbar ist und die Entscheidung, in welcher Weise der Reifen komplettiert werden soll, beispielsweise bezüglich der Mischung der noch aufzubringenden Bauteile, auf einen späteren Zeitpunkt verschoben ist.

Bei einer bevorzugten Variante dieses bekannten Herstellverfahrens umfasst der im ersten Verfahrensteil hergestellte Reifen-Basiskörper bis auf den Laufstreifen bereits sämtliche sonstigen Reifenbauteile.

Um einen guten Verbund des Reifen-Basiskörpers zu den noch aufzubringenden Reifenbauteilen zu unterstützen, wird die Reifenaußenfläche des Reifen-Basiskörper in dem Bereich, wo diese aufgebracht werden, aufgerauht. Dabei wird Gummimaterial abgetragen, welches im entsprechenden Ausmaß vorhanden sein muß, um unbeabsichtigte Verletzungen anderer Reifenbauteile oder ein unbeabsichtigtes Freilegen von Festigkeitsträgern zu vermeiden. Dieses Material steht dann zur Verfügung, wenn der Reifen-Basiskörper bereits mit einer entsprechend dickeren Gummischicht auf seiner Außenseite versehen ist, was etwa durch das Aufbringen einer gesonderten Gummiabdecklage oder, falls die äußerste Lage des Reifen-Basiskörper eine Lage mit Festigkeitsträgern, beispielsweise eine Bandagenlage, ist, durch eine asymmetrische Gummierung derselben möglich ist.

Die Erfindung hat sich nun die Aufgabe gestellt, eine solche asymmetrische Gummierung der radial äußeren Lage, die eine Gürtellage oder eine Bandagenlage sein kann, zu optimieren, um einerseits ein unbeabsichtigtes Verletzen der Festigkeitsträger diese Lage beim Anrauhvorgang zu vermeiden und um andererseits das Gesamtgewicht des Reifens nicht unnötig zu erhöhen.

Was das Verfahren betrifft, wird diese Aufgabe erfindungsgemäß dadurch gelöst, dass die radial äußerste Lage derart asymmetrisch gummiert wird, dass sich der höhere Materialanteil an der Außenseite dieser Lage aus dem durch den Anrauhvorgang wieder abgetragenen Material plus einem Anteil an Reservematerial in der Größenordnung eines Bruchteiles des abzutragenden Materials zusammensetzt.

Was den Reifen-Basiskörper betrifft, wird die Aufgabe dadurch gelöst, dass sich der höhere Materialanteil an der Außenseite der radial äußersten Lage aus dem durch den Anrauhvorgang abgetragenen Material plus einem Anteil an Reservematerial in der Größenordnung eines Bruchteiles des abzutragenden Materials zusammensetzt.

Die gemäß der Erfindung vorgenommene Optimierung der asymmetrischen Gummierung der radial äußersten Lage stellt nun sicher, dass die Festigkeitsträger nicht freigelegt und auch nicht verletzt werden, wobei gleichzeitig ein Zuviel an Material, welches gewichtserhöhend wirkt, vermieden wird.

Dabei haben Versuche gezeigt, dass ein optimaler Bereich für den erwähnten Bruchteil zwischen einem Zehntel und einem Fünftel des beim Anrauhvorgang abgetragenen Materials liegt.

Um an den Seitenkanten der radial äußersten Lage ein unbeabsichtigtes Verletzen oder Freilegen der Festigkeitsträger zu verhindern, ist es von Vorteil, wenn in diesen Bereichen eine Abdeckung der Kanten durch gesonderte Seitenstreifen erfolgt. Um einen guten Verbund zu gewährleisten, sollten diese Seitenstreifen aus dem Material der Gummierungsmischung der radial äußersten Lage bestehen.

Bei einer Bandagenlage als radial äußerster Lage, die einteilig und in der gewünschten Breite auf den Reifen-Basiskörper aufgebracht ist, können diese Seitenstreifen bereits aufdoubliert sein, was den Aufbauvorgang des Reifen-Basiskörpers beschleunigt.

Dabei kann eine erfindungsgemäß ausgeführte Bandagenlage auch eine Spulbandage sein, bei der ein Bandagenstreifen, insbesonders Stoss an Stoss liegend, wendelförmig als radial äußerste Lage auf den Reifen-Basiskörper gewickelt ist.

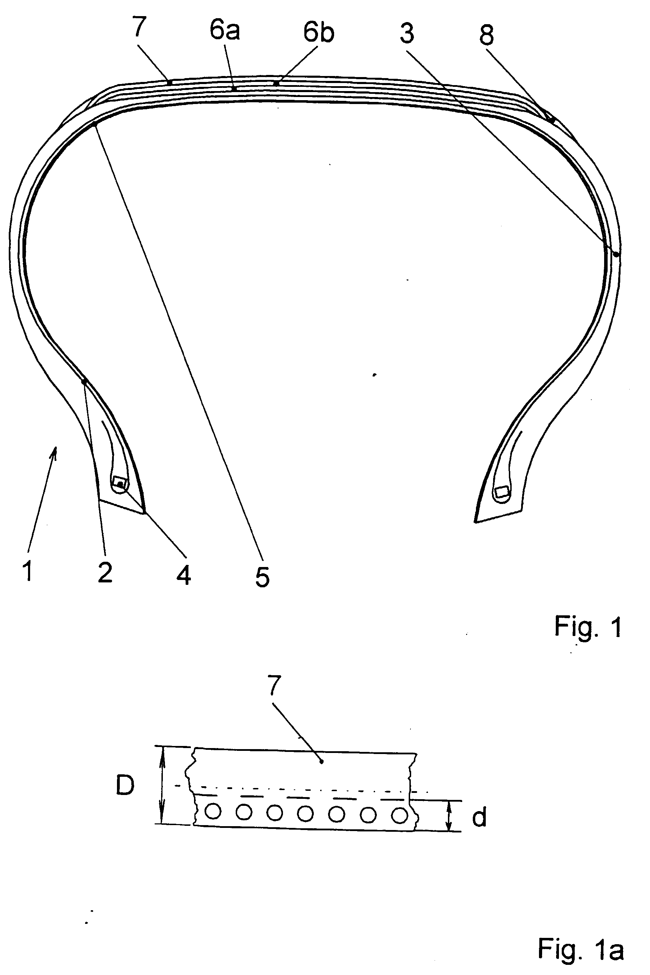

Weitere Merkmale, Vorteile und Einzelheiten der Erfindung werden nun anhand der Zeichnung, die ein Ausführungsbeispiel darstellt, näher beschrieben. Dabei ist in Fig.1 schematisch ein Querschnitt durch einen Reifen-Basiskörper, der gemäß der gegenständlichen Erfindung ausgeführt bzw. aufgebaut ist, dargestellt und Fig.1a zeigt in vergrößerter Darstellung einen Querschnitt durch einen Teilbereich der als radial äußerste Lage auf den Reifen-Basiskörper aufgebrachten Bandagenlage.

Der in der Fig. 1 dargestellte Reifen-Basiskörper 1 entspricht einer der möglichen Varianten eines gemäß dem aus der europäischen Patentanmeldung Nr. 0 729 825 bekannten Verfahrens im ersten Verfahrensteil hergestellten Teilreifens A. Der Reifen-Basiskörper 1 ist daher zwar vulkanisiert, aber noch kein kompletter Reifen. Er umfaßt als Bauteile eine hier einlagig ausgeführte Radialkarkasse 2, die durch Umschlingen von Wulstkernen 4 im Reifen-Basiskörper 1 gehalten ist, Seitenwände 3, eine auf herkömmliche Art und Weise luftdicht ausgeführte Gummiinnenplatte 5 und einen hier zwei Gürtellagen 6a, 6b umfassenden Gürtel 6, der durch eine im vorliegenden Ausführungsbeispiel einlagig ausgeführte Bandage 7 abgedeckt ist, die an ihren Kantenbereichen noch mit gesonderten Seitenstreifen 8 überlappend abgedeckt ist.

Der dargestellte und beschriebene Reifen-Basiskörper 1 ist für einen Reifen für Personenkraftwagen oder leichte Nutzfahrzeuge vorgesehen und wird schrittweise aufgebaut. Ein herkömmlicher schrittweiser Aufbau ist beispielsweise nach einem Zweistufenverfahren möglich, wo auf einer Aufbautrommel zuerst das Auflegen der Innenplatte 5, anschließend das Auflegen der Radialkarkasse 2, das Setzen der Wulstkerne 4, der Vorgang des Hochschlagens der Karkassenlagenenden sowie das Aufbringen der Seitenwandteile und Gummiprofile im Bereich der Wülste erfolgen. Auf einer zweiten Aufbautrommel wird anschließend das Aufbringen der Gürtellagen 6a, 6b und das Aufbringen der Bandage 7 durchgeführt.

Der Aufbau des Reifen-Basiskörpers 1 ist nicht Gegenstand der vorliegenden Erfindung und kann auch nach einem anderen Verfahren durchgeführt werden. Der Reifen-Basiskörper 1 kann auch abweichend aufgebaut werden und beispielsweise eine mehrlagige Radialkarkasse 2 und mehr als zwei Gürtellagen 6a, 6b besitzen. Sowohl die Radialkarkasse als auch die Gürtellagen können herkömmlich aufgebaut sein und in üblicher Art und Weise mit Festigkeitsträgern - die Karkassenlage aus einem textilen Material, die Gürtellagen aus Stahlkord- versehen sein. Die Bandagenlage 7 kann ebenfalls in herkömmlicher Weise in Gummi eingebettete Fäden aus einem wärmeschrumpffähigen Material, insbesondere aus Nylon, besitzen, die innerhalb der Bandage parallel zueinander und zumindest im Wesentlichen in Reifenumfangsrichtung verlaufen.

Wie bereits eingangs erwähnt, wird dieser Reifen-Basiskörper 1 bevorzugt bereits derart aufgebaut und derart vulkanisiert, dass die Bauteile, aus denen er besteht, eine Kontur und einen Querschnitt besitzen bzw. erhalten, die der gewünschten Kontur und dem gewünschten Querschnitt dieser Bauteile im fertig aufgebauten und fertiggestellten Reifen entsprechen.

Bei dem in Fig.1 dargestellten Reifen-Basiskörper 1 erfordert eine Komplettierung zum fertigen Reifen nur noch das Aufbringen des hier nicht dargestellten Laufstreifens, welcher vorzugsweise als roher und vordoublierter Laufstreifen auf den vulkanisierten Reifen-Basiskörper 1 aufgebracht wird. Anschließend wird der derart fertig aufgebaute Reifen nochmals einem Vulkanisationsvorgang, beim Aufbringen eines rohen Laufstreifens in einer dem Laufstreifen das Profil vermittelnden Vulkanisationsform, unterzogen.

Wie ebenfalls bereits eingangs erwähnt, wird bislang bei der praktischen Umsetzung des aus der EP-A 0 729 825 bekannten Herstellungsverfahrens für Reifen als letzter, oberster Bauteil des Reifen-Basiskörpers 1 eine gesonderte Gummiabdecklage vorgesehen. Dies erfordert das Hantieren mit einem gesonderten Bauteil - der Gummiabdecklage - und bedingt bei Reifen-Basiskörpern, die mit einer Bandage 7 versehen werden, zweifache Bauteilüberlappungen, nämlich jene der Bandage und der Gummiabdecklage. Dadurch entstehen Beeinträchtigungen der Reifengleichförmigkeit und der Laufruhe des fertigen Reifens. Die gesonderte Gummiabdecklage dient einerseits dazu, den Reifen-Basiskörper 1 im Zeitraum bis zur Weiterverarbeitung, zur Komplettierung zum fertigen Reifen, vor Umwelteinflüssen zu schützen und bietet andererseits die Möglichkeit, den Reifen-Basiskörper 1 vor dem Aufbringen des Laufstreifens anzurauhen, wodurch Gummimaterial abgetragen wird, um einen guten Verbund zu den noch aufzubringenden Reifenbauteilen, hier dem Laufstreifen, sicherzustellen.

Gemäß der gegenständlichen Erfindung kann auf diese Gummidecklage verzichtet werden, indem die Bandagenlage 7 auf der einen Seite der Verstärkungsfäden mit einer dickeren Gummierung versehen wird als auf der zweiten Seite. Dabei wird die Bandage 7 so positioniert, dass die Seite mit der dickeren Gummierung auf der Außenseite des Reifens liegt.

Die ursprüngliche Dicke d der Bandage 7, wo eine bezüglich der Verstärkungsfäden symmetrische Gummierung gegeben ist, beträgt üblicherweise zwischen 0,5 und 0,6 mm. In Fig. 1a ist mit d der zwischen der Unterseite und einer strichlierten Linie vorliegende Abstand, welcher der Dicke bei symmetrischer Ausführung entspricht, eingezeichnet. Die einseitige Erhöhung der Dicke der Bandage 7 auf eine Gesamtdicke D wird um soviel Material durchgeführt, dass dieses sich in Summe aus dem nachfolgend, vor dem Komplettieren des Reifens, durch Anrauhen wieder entfernten Material plus einem zusätzlichen Materialanteil zusammensetzt, welcher zumindest 10%, maximal 20%, des durch Anrauhen wieder entfernten Anteiles beträgt.

Die gemäß der Erfindung optimale Auslegung der asymmetrischen Gummierung der Bandage 7 stellt sicher, dass die Festigkeitsträger, die Nylonfäden, in der Bandagenlage 7 beim Anrauhvorgang nicht verletzt werden. Darüber hinaus wird ein Zuviel an zusätzlichem Material vermieden, um das Gewicht des Reifens nicht unnötig zu erhöhen und um Beeinträchtigungen der Reifengleichförmigkeit und der Laufruhe zu vermeiden.

Es hat sich herausgestellt, dass üblicherweise bei PKW-Reifen der gängigen Dimensionen der insgesamt beim Anrauhvorgang abgebürstete Materialanteil in der Größenordnung von 40 g Gummi beträgt. Die Dicke der Bandage 7 wird daher um 0,5 bis 0,6 mm erhöht.

Von besonderem Vorteil ist die gegenständliche Erfindung beim Einsatz von Reifen, wo eine einzige Bandagenlage über den Reifenumfang vorgesehen ist. Es kann jedoch eine erfindungsgemäß asymmetrisch gummierte Bandagenlage auch in mehr als einer Lage über den Reifenumfang aufgebracht werden. In Folge der oben beschriebenen Optimierung hält sich hier die Gewichtserhöhung des Gesamtreifens in vertretbarem Rahmen.

Alternativ dazu kann zuerst eine herkömmliche, symmetrisch gummierte Bandagenlage und anschließend kann eine erfindungsgemäß ausgeführte Bandagenlage aufgebracht werden.

Um während des Anrauhvorganges Verletzungen der Bandagenkanten zu verhindern, ist es von Vorteil, wenn dort die in Fig.1 dargestellten Seitenstreifen 8 aufgebracht werden, die zum Teil, insbesondere etwa zur Hälfte, mit der Bandagenlage 7 überlappen und deren weitere Teilbereiche den Reifen zum Schulterbereich zu abdecken. Solche Streifen 8 werden üblicherweise in einer Breite von ca. 10 mm und in einer Dicke von 0,5 mm ausgeführt und bestehen insbesondere aus jener Gummimischung, die für die Gummierung der Bandagenlage 7 eingesetzt wird.

Die beiden Materialanteile, die einer Erhöhung der ursprünglichen Dicke d auf die Gesamtdicke D ergeben, sind in Fig. 1a durch eine strichpunktierte Linie voneinander abgesetzt veranschaulicht.

Bei einem Reifen, wo eine einlagige Bandage 7 vorgesehen ist, ist es zur Vereinfachung des Herstellprozesses von Vorteil, wenn die beiden Seitenstreifen 8 bereits vor dem Aufbringen der Bandagenlage 7 auf diese im Bereich der Seitenkanten aufdoubliert werden. Somit bildet die Bandage 7 mitsamt den Seitenstreifen 8 einen einzigen, einfach zu handhabenden Bauteil.

Die gegenständliche Erfindung ist gleichermaßen auch bei Spulbandagen einsetzbar, wo die Bandagelage aus einem wendelförmig über den Umfang des Reifens gewickelten, im allgemeinen 10 bis 14 mm breiten Streifen aus Bandagenmaterial, das aus in eine Kautschukmischung eingebetteten Nylonfäden besteht, erstellt wird. Bei einer spiral- bzw. wendelförmig gewickelten Bandage werden die Seitenstreifen 8 nach dem Aufbringen der Bandage gesondert aufgelegt.

Das in den Zeichnungsfiguren dargestellte und oben beschriebene Ausführungsbeispiel bezieht sich auf einen Reifen-Basiskörper, wo als radial äußerste Lage eine Bandagenlage aufgebracht ist. Die Erfindung ist jedoch auf Ausführungsvarianten, wo die radial äußerste Lage eine Gürtellage ist, sei dies eine der inneren Gürtellagen oder bereits die als äußerste Gürtellage vorgesehene Gürtellage, gleichermaßen anwendbar und übertragbar. Auch bei Gürtellagen handelt es sich um in eine Gummierungsmischung eingebettete Festigkeitsträger, insbesondere aus Stahlkord, die innerhalb einer Lage parallel zueinander verlaufen. Auch hier kann eine gesonderte Abdeckung der Kanten mit Seitenstreifen aus Gummi erfolgen und von Vorteil sein.

Erwähnt sei ferner, dass der Anrauhvorgang, von dem hier die Rede ist, insbesondere auf mechanische Weise, etwa durch Abbürsten, durchgeführt wird.

## Patentansprüche

1. Verfahren zur Herstellung eines Radialluftreifens, bei dem in einem ersten Verfahrensteil ein Reifen-Basiskörper aufgebaut und vulkanisiert wird, welcher in einem zweiten Verfahrensteil zu einem kompletten Reifen ergänzt und nochmals vulkanisiert wird, wobei der Reifen-Basiskörper Wulstbereiche, Seitenwände, eine Radialkarkasse und als radial äußerste Lage entweder eine der Gürtellagen oder eine einen bereits aufgebrachten Gürtel abdeckende und zumindest einlagig ausgeführte Bandage umfaßt, die bezüglich der in ihr verlaufenden Festigkeitsträger asymmetrisch gummiert ist, und wobei die Seite mit der dickeren Gummierung der Außenseite zugewandt und vor dem Komplettieren des Reifens im zweiten Verfahrensteil angerauht wird, dadurch gekennzeichnet, dass die radial äußerste Lage (7) derart asymmetrisch gummiert wird, dass sich der höhere Materialanteil an der Außenseite dieser Lage (7) aus dem durch den Anrauhvorgang wieder abgetragenen Material plus einem Anteil an Reservematerial in der Größenordnung eines Bruchteiles des abzutragenden Materials zusammensetzt.

2. Reifen-Basiskörper hergestellt nach einem in zwei voneinander getrennten Teilen durchgeführten Verfahren, bei dem im ersten Verfahrensteil der Reifen-Basiskörper aufgebaut und vulkanisiert wird, welcher im zweiten Verfahrensteil zu einem kompletten Reifen ergänzt und nochmals vulkanisiert wird, wobei der Reifen-Basiskörper Wulstbereiche, Seitenwände, eine Radialkarkasse und als radial äußerste Lage entweder eine der Gürtellagen oder eine einen bereits aufgebrachten Gürtel abdeckende und zumindest einlagig ausgeführte Bandage aufweist, wobei die radial äußerste Lage bezüglich der in ihr verlaufenden Festigkeitsträger asymmetrisch gummiert ist, und wobei die Seite mit der dickeren Gummierung der Außenseite zugewandt ist und vor dem Komplettieren zu einem fertigen Reifen im zweiten Verfahrensteils angerauht wird, dadurch gekennzeichnet, dass sich der höhere Materialanteil an der Außenseite der radial äußersten Lage (7) aus dem durch den Anrauhvorgang abgetragenen Material plus einem Anteil an Reservematerial in der Größenordnung eines Bruchteiles des abzutragenden Materials zusammensetzt.

3. Verfahren beziehungsweise Reifen-Basiskörper nach Anspruch 1 oder 2, dadurch gekennzeichnet, dass der Bruchteil ein Zehntel bis ein Fünftel des beim Anrauhvorgang abgetragenen Materials beträgt.

4. Verfahren beziehungsweise Reifen-Basiskörper nach einem der Ansprüche 1 bis 3, dadurch gekennzeichnet, dass die Außenkanten der radial äußersten Lage (7) durch Seitenstreifen (8) überlappend abgedeckt sind.

5. Verfahren beziehungsweise Reifen-Basiskörper nach Anspruch 4, dadurch gekennzeichnet, dass die Seitenstreifen (8) aus dem Material der Gummierungsmischung der radial äußersten Lage (7) bestehen.

6. Verfahren beziehungsweise Reifen-Basiskörper nach Anspruch 4 oder 5, mit einer Bandagenlage als radial äußerster Lage, dadurch gekennzeichnet, dass bei einer Bandagenlage (7), die einteilig und in der gewünschten Breite auf den Reifen-Basiskörper (1) aufgebracht ist, die Seitenstreifen (8) auf die Bandagenlage (7) doubliert sind.

7. Verfahren beziehungsweise Reifen-Basiskörper nach einem der Ansprüche 1 bis 5, mit einer Bandagenlage als radial äußerster Lage, dadurch gekennzeichnet, dass die Bandagenlage (7) eine Spulbandage ist, bei der ein Streifen aus Bandagenlagenmaterial wendelförmig auf den Reifen-Basiskörper (1) gewickelt ist.
